# EUROPEAN PATENT APPLICATION

(11) **EP 4 220 148 A1**
(43) Date of publication of application: **02.08.2023**
(21) Application number: 21902938.6
(22) Date of filing: 26.08.2021
(51) Int. Cl.: G01N 29/04, G01N 29/265

(54) **MOVING APPARATUS, AND MEMBER INSPECTION METHOD AND MEMBER MANUFACTURING METHOD USING SAME**

(30) Priority: 11.12.2020 JP 2020205852
(71) Applicant: JFE Steel Corporation, Tokyo 100-0011 (JP)
(72) Inventor: TOKUMOTO, Yuta, Tokyo 100-0011 (JP); ISHIDA, Kyohei, Tokyo 100-0011 (JP)
(74) Representative: Grünecker Patent- und Rechtsanwälte PartG mbB
(86) International application number: PCT/JP2021/031425
(87) International publication number: WO 2022/123833

(57) **Abstract**

Provided are: a moving device, when moving along a surface of a member inclined to the horizontal direction while attracted to be held on the surface of the member, being capable of traveling stably on the surface of the member while a rectilinear moving direction is maintained without being influenced by gravity; and a member inspection method and a member manufacturing method using the moving device.

The moving device includes: a carriage body having moving mechanisms on both left and right sides in a traveling direction so as to be movable along the surface of the member; an attracting mechanism by which the carriage body is attracted to be held on the surface of the member; a detector that detects an angle of a width direction, of the carriage body, orthogonal to the traveling direction to the horizontal direction; and a controller that controls individually velocities of the moving mechanisms provided on both the left and right sides in the traveling direction, based on the angle detected by the detector.

## Description

### Technical Field

The present invention relates to a moving device that moves along a surface of a member such as a pipe, and a member inspection method and a member manufacturing method using the moving device.

### Background Art

For the purpose of, for example, inspecting a surface of a member such as a pipe, a moving device that is equipped with, for example, an inspection device and is movable along the surface of the member is used. For example, Patent Literature 1 discloses a wall-surface moving device including crawler tracks having track belts on which magnets are mounted. By the crawler tracks being driven to rotate, the wall-surface moving device travels on a wall surface while attracted to be held on the wall surface due to the magnetic attraction of the magnets. In addition, Patent Literature 2 discloses a traveling carriage including a magnet inside the body thereof. During an operation, in the traveling carriage, the magnet exhibits adequate pulling force by coming close to a member on which the traveling carriage travels, and the traveling carriage, when relocated, becomes easily separated from the member by the magnet being moved away from the member. Moreover, Patent Literature 3 discloses an ultrasonic flaw detection device capable of being attracted to be held on an inspection subject by using wheels made of, for example, a magnet material.

### Citation List

### Patent Literatures

Patent Literature 1: Japanese Patent No. 6681474
Patent Literature 2: Japanese Unexamined Patent Application Publication No. 9-52196
Patent Literature 3: Japanese Unexamined Patent Application Publication No. 62-124458

### Summary of Invention

### Technical Problem

In each of the devices disclosed in Patent Literatures 1 to 3, a moving device is attracted to be held on a surface of a member by attraction force moderate enough not to prevent the moving device from moving on the surface of the member. That is, the magnitude of the attraction force is required to be limited so as not to prevent the moving device, which moves on the surface of the member while attracted to be held on the surface of the member, from moving, and there has arisen a problem that the moving direction of the moving device is susceptible to gravity.

Specifically, when the moving device moves in an inclination direction of a surface of the member and in the up-down direction (that is, the gravity direction), the moving direction of the moving device is not influenced by gravity and thus does not turn, and the moving device can move stably along the surface of the member. In contrast, when the moving device moves on a portion of the member, whose surface is inclined, in the horizontal direction (that is, a direction orthogonal to the gravity direction) so as to traverse the portion of the member and if, in particular, the inclination of the surface of the member is more than or equal to a predetermined angle, such a phenomenon occurs that the moving device travels while moving downward under the influence of gravity, and the moving direction of the moving device thereby turns. Thus, the moving device loses the ability to move straightly, and cannot move stably.

The present invention has been made in view of the problem, and an object thereof is to provide: a moving device, when moving along a surface of a member inclined to the horizontal direction while attracted to be held on the surface, capable of traveling stably on the surface of the member while maintaining the ability to move straightly, without being influenced by gravity; and a member inspection method and a member manufacturing method using the moving device.

### Solution to Problem

The solution to the above-described problem is as follows.
[1] A moving device including: a carriage body; moving mechanisms provided on both left and right sides, in a traveling direction, of the carriage body and configured to move the carriage body along a surface of a member; an attracting mechanism by which the carriage body is attracted to be held on the surface of the member; a detector configured to detect an angle between a width direction, of the carriage body, orthogonal to the traveling direction and a horizontal direction; and a controller configured to control individually velocities of the moving mechanisms provided on both the left and right sides in the traveling direction, based on the angle detected by the detector.
[2] The moving device according to item [1], in which the moving mechanisms are wheels or crawler tracks.
[3] The moving device according to item [1] or item [2], in which the member is a soft magnetic material, and the attracting mechanism is a magnet.
[4] The moving device according to item [3], in which the magnet is incorporated into each of the moving mechanisms.
[5] The moving device according to any one of items [1] to [4], in which the detector is a level.
[6] The moving device according to any one of items [1] to [5], in which the controller is configured to control, when the carriage body is moved along the surface of the member with the angle detected by the detector being more than or equal to a predetermined value, the velocities of the moving mechanisms provided on both the left and right sides in the traveling direction so that a velocity of a lower side one of the moving mechanisms in a gravity direction is higher than a velocity of a higher side one of the moving mechanisms in the gravity direction.
[7] The moving device according to item [6], in which the controller is configured to control, when the carriage body is moved along the surface of the member with the angle detected by the detector being more than or equal to the predetermined value, the velocities of the moving mechanisms provided on both the left and right sides in the traveling direction so that the velocity of the lower side one of the moving mechanisms in the gravity direction is 5% or more higher than the velocity of the higher side one of the moving mechanisms in the gravity direction.
[8] The moving device according to any one of items [1] to [7], in which the controller is configured to control, when the carriage body is moved along the surface of the member with the angle detected by the detector being less than a predetermined value, the velocities of the moving mechanisms provided on both the left and right sides in the traveling direction to be equal to each other.
[9] The moving device according to any one of items [6] to [8], in which the predetermined value is 60 degrees.
[10] The moving device according to any one of items [1] to [9], further including an inspection device mounted on or in the carriage body and configured to inspect the surface of the member.
[11] A member inspection method including, inspecting, by using the moving device according to item [10], each part of the surface of the member by moving the moving device along the surface of the member while controlling individually the velocities of the moving mechanisms based on the angle detected by the detector.
[12] A member manufacturing method including a step of inspecting each part of a surface of a member in accordance with the member inspection method according to item [11].

According to the moving device, and the member inspection method and the member manufacturing method using the moving device, when the moving device moves along, while attracted to be held on, the surface of the member inclined to the horizontal direction, the moving device is capable of moving stably on the surface of the member while maintaining the rectilinear moving direction without being influenced by gravity, by controlling individually the velocities of the moving mechanisms provided on both sides of the carriage body based on the angle of the carriage body.

### Brief Description of Drawings

[Fig. 1] Fig. 1 illustrates an example of the configuration of a moving device of the present invention.
[Figs. 2] Figs.2(a) to 2(d) are schematic views of examples of the moving device of the present invention.
[Figs. 3] Figs.3(a) and 3(b) are schematic views of examples of the traveling status of the moving device of the present invention.
[Figs. 4] Figs.4(a) and 4(b) are schematic views of examples of the traveling status of the moving device of the present invention.
[Figs. 5] Figs.5(a) to 5(c) are schematic views of an example of a detector of the moving device of the present invention.

### Description of Embodiments

Hereinafter, embodiments of a moving device, and a member inspection method and a member manufacturing method using the moving device, of the present invention, will be described in a specific manner with reference to the drawings.

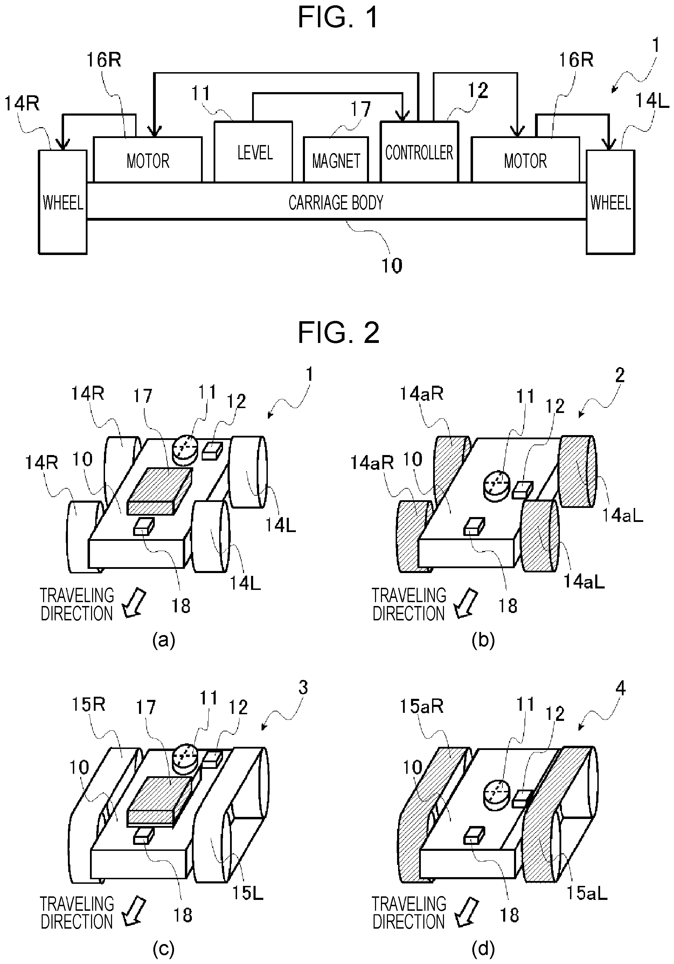

Fig. 1 and Figs. 2(a) to 2(d) illustrate moving devices 1 to 4 of the present embodiments.

Each of the moving devices 1 to 4 of the present embodiments, as described later, serves as an inspection apparatus for inspecting a surface of a pipe (member) of metal that is a soft magnetic material.

As Fig. 1 and Fig. 2(a) illustrate, the moving device 1 of the present embodiment includes a carriage body 10, wheels (moving mechanisms) 14L and 14R, a magnet (attracting mechanism) 17, a level (detector) 11, a controller 12, and an inspection device 18.

The wheels (moving mechanisms) 14L are mounted on the left side, in a traveling direction, of the carriage body 10, and the wheels (moving mechanisms) 14R are mounted on the right side, in the traveling direction, of the carriage body 10 so that the carriage body 10 is movable along a surface of a pipe. On the carriage body 10, a motor 16L that drives the wheels 14L and a motor 16R that drives the wheels 14R are provided.

The magnet (attracting mechanism) 17 is mounted on the carriage body 10, and, due to the magnetic force thereof, the carriage body 10 is attracted to be held on the surface of the pipe. Note that the magnet 17 is mounted on the upper surface of the carriage body 10 in Fig. 1 and Figs. 2(a) and 2(c) for simple description; however, in actual use, the magnet 17 is preferably mounted on the lower surface of the carriage body 10 with a gap between the magnet 17 and the surface of the pipe (member).

The level (detector) 11 and the controller 12 are further mounted on the carriage body 10. The level (detector) 11 detects an angle between the horizontal direction and the width direction of the carriage body 10, which is attracted to be held on the surface of the pipe, that is, a direction orthogonal to the traveling direction of the carriage body 10. The controller 12 then controls, based on the angle detected by the level 11, the number of rotations, that is, the velocity of each of the wheels 14L and 14R provided on both the left and right sides, in the traveling direction, of the carriage body 10 on an individual basis. The specifics of the control will be described later. The inspection device 18 is further mounted on the carriage body 10 and inspects various parts of the surface of the pipe while being moved along the surface of the pipe by the carriage body 10. Examples of the inspection device 18 include a camera for taking a photograph of the surface of the pipe (member), a flaw detection device that inspects a flaw on the surface of the pipe (member), a shape measurement device that measures the shape of the pipe (member), and a wall-thickness measurement device that measures the wall thickness of the pipe (member).

Figs. 2(b) to 2(d) illustrate the moving devices 2 to 4 that are modifications in which the moving mechanisms and the attracting mechanism are modified. The moving device 2 in Fig. 2(b) employs, instead of the wheels 14L and 14R in Fig. 2(a), magnetic wheels 14aL and 14aR (moving mechanisms, attracting mechanisms), and, due to the incorporation of magnets into the magnetic wheels 14aL and 14aR, the magnet 17 on the carriage body 10 is omitted. The moving device 3 in Fig. 2(c) employs, instead of the wheels 14L and 14R in Fig. 2(a), crawler tracks (moving mechanisms) 15L and 15R, which are endless tracks. The moving device 4 in Fig. 2(d) employs, instead of the wheels 14L and 14R in Fig. 2(a), magnetic crawler tracks (moving mechanisms, attracting mechanisms) 15aL and 15aR, which are endless tracks. Due to the incorporation of magnets into the magnetic crawler tracks 15aL and 15aR, the magnet 17 on the carriage body 10 is omitted. Note that the magnet 17 may also be provided for each of the moving devices 2 and 4 in Figs. 2(b) and 2(d) as with the moving devices 1 and 3 in Figs. 2(a) and 2 (c) .

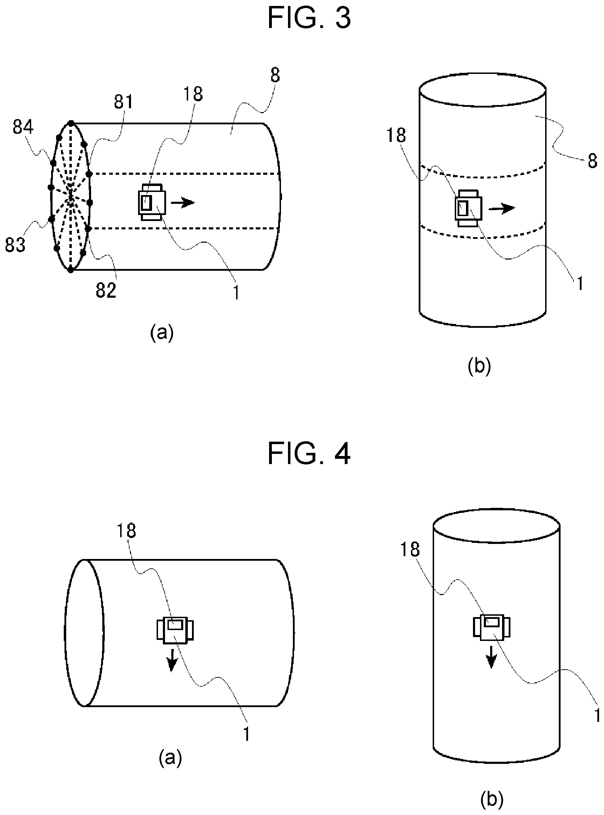

Hereinafter, there will be described an operation of the moving device 1 when the moving device 1 is moved along a surface of a pipe 8 extending in the horizontal direction and extending in the vertical direction to inspect the surface of the pipe 8. Fig. 3(a) and Fig. 4(a) illustrate the moving statuses of the moving device 1 in a region where the pipe 8 extends in the horizontal direction. Fig. 3(b) and Fig. 4(b) illustrate the moving statuses of the moving device 1 in a region where the pipe 8 extends in the vertical direction.

In the present embodiments, magnetic force is generated by the magnet 17 mounted on the carriage body 10 (refer to Figs. 2(a) and 2(c)) or by the magnets incorporated into the magnetic wheels 14aL and 14aR (refer to Fig. 2(b)) or incorporated into the magnetic crawler tracks 15aL and 15aR (refer to Fig. 2(d)). Due to the magnetic force, the carriage body 10 travels along the surface of the pipe 8 while attracted to be held on the surface of the pipe 8. The surface of the pipe 8 has a cylindrical shape, and the pipe 8 extends in the horizontal direction and in the vertical direction. Thus, the angle of the surface of the pipe 8 to the horizontal direction varies depending on positions on the surface of the pipe 8, and the angle of the carriage body 10, which moves on the surface of the pipe 8, to the horizontal direction thus varies accordingly.

Thus, the level 11 mounted on the carriage body 10 in Fig. 1 detects the angle between the width direction of the carriage body 10 and the horizontal direction. Moreover, based on the angle, the controller 12 controls individually the number of rotations of each of the motors 16L and 16R that drive the respective wheels 14L and 14R provided on both the left and right sides, in the traveling direction, of the carriage body 10. In this way, the velocity of each of the wheels 14L, 14R, 14aL, and 14aR provided on both the left and right sides, in the traveling direction, of the carriage body 10 or the velocity of each of the crawler tracks 15L, 15R, 15aL, and 15aR is controlled on an individual basis.

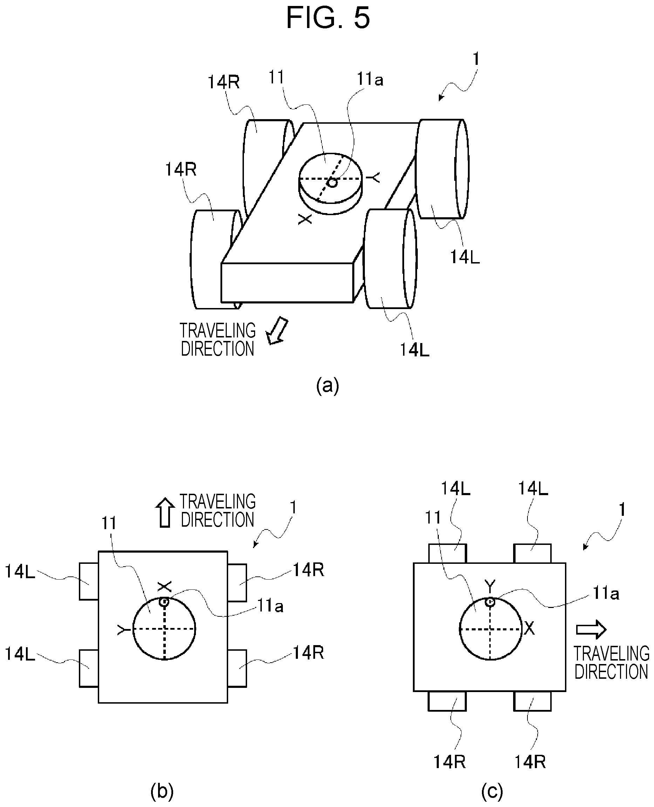

In the present embodiment, the level 11 is constituted by a bubble tube. As Fig. 5(a) illustrates, the level 11 has an X axis and a Y axis and is mounted on the carriage body 10 so that the traveling direction of the carriage body 10 coincides with the X axis, and the width direction of the carriage body 10 coincides with the Y axis. When a bubble 11a of the level 11 is positioned at the center of the X axis, the angle between the traveling direction of the carriage body 10 and the horizontal direction is determined as 0 degrees. In addition, when the bubble 11a is positioned at an end of the X axis, the angle between the traveling direction of the carriage body 10 and the horizontal direction is determined as 90 degrees. Moreover, when the bubble 11a is positioned between the center and an end of the X axis, the angle between the traveling direction of the carriage body 10 and the horizontal direction is determined depending on the position of the bubble 11a. Similarly, when the bubble 11a of the level 11 is positioned at the center of the Y axis, the angle between the width direction of the carriage body 10 and the horizontal direction is determined as 0 degrees. In addition, when the bubble 11a is positioned at an end of the Y axis, the angle between the width direction of the carriage body 10 and the horizontal direction is determined as 90 degrees. Moreover, when the bubble 11a is positioned between the center and an end of the Y axis, the angle between the width direction of the carriage body 10 and the horizontal direction is determined depending on the position of the bubble 11a.

As Fig. 5(b) illustrates, when the traveling direction of the carriage body 10 coincides with the up-down direction, the value on the Y axis of the level 11 is 0 degrees, and the value on the X axis is from 0 degrees to 90 degrees. In addition, as Fig. 5(c) illustrates, when the traveling direction of the carriage body 10 coincides with the horizontal direction, the value on the X axis of the level 11 is 0 degrees, and the value on the Y axis is from 0 degrees to 90 degrees. Such use of the level 11 enables to determine the angle between the traveling direction of the carriage body 10 and the horizontal direction and the angle of the width direction of the carriage body 10 to the horizontal direction.

When the carriage body 10 horizontally moves in the length direction of the pipe 8 at a position where the surface of the pipe 8 is inclined to the horizontal direction at an angle of 60 degrees or more, the moving device 1 travels while moving downward under the influence of gravity, and the moving direction of the moving device 1 is thereby likely to turn. For example, such phenomenon occurs when, as Fig. 3(a) illustrates, the carriage body 10 horizontally moves in the length direction of the pipe 8, on the surface of the pipe 8 extending in the horizontal direction, in a region, in the circumferential direction, between a position 81 of 2 o'clock and a position 82 of 4 o'clock or between a position 83 of 8 o'clock and a position 84 of 10 o'clock. In addition, as Fig. 3(b) illustrates, when the carriage body 10 travels in the horizontal direction so as to turn around along the surface of the pipe 8 extending in the vertical direction, the moving device 1 also travels while moving downward under the influence of gravity, and the moving direction of the moving device 1 is thereby likely to turn.

At this time, the angle between the width direction of the carriage body 10 and the horizontal direction is 60 degrees or more, and the value on the Y axis of the level 11 is from 60 degrees to 90 degrees. The controller 12 in Fig. 1 controls individually the velocity of each of the wheels 14L and 14R provided on both the left and right sides, respectively, in the traveling direction, of the carriage body 10 when the value on the Y axis of the level 11 is from 60 degrees to 90 degrees. Specifically, in the wheels 14L and 14R provided on both the left and right sides, in the traveling direction, of the carriage body 10, the velocity of the wheels on the lower side in the gravity direction is controlled to be higher than the velocity of the wheels on the higher side in the gravity direction. Such a control is performed regardless of: the weight of the moving device 1; the spacing between the wheel 14L and the corresponding wheel 14R provided on both the left and right sides, in the traveling direction, of the carriage body 10; the spacing between the wheels 14L or the wheels 14R provided on the front and rear sides, in the traveling direction, of the carriage body 10; and the magnitude of the attraction force acting between the magnet 17 and the pipe 8. At this time, the velocity of the wheels on the lower side in the gravity direction is preferably controlled to be 5% or more higher than the velocity of the wheels on the higher side in the gravity direction. By the velocities of the wheels 14L and the wheels 14R that are provided on both the left and right sides, respectively, in the traveling direction, of the carriage body 10 differing from one another in this way, the force to turn the carriage body 10 against gravity is generated and suppresses the moving device 1 from moving downward under the influence of gravity. As a result, the moving device 1 can travel stably on the surface of the member while maintaining the rectilinear moving direction without being influenced by gravity.

On the other hand, in cases other than the cases under the above-described conditions, the moving direction of the moving device 1 hardly turns due to the influence of gravity. That is, such phenomenon occurs when the carriage body 10 horizontally moves in the length direction of the pipe 8, on the surface of the pipe 8 extending in the horizontal direction, in a region, in the circumferential direction, between the position 84 of 10 o'clock and the position 81 of 2 o'clock or between the position 82 of 4 o'clock and the position 83 of 8 o'clock. In addition, the phenomenon occurs when, as Figs. 4(a) and 4(b) illustrate, the carriage body 10 moves in the up-down direction on the surface of the pipe 8 extending in the horizontal direction or in the vertical direction.

At this time, the angle between the width direction of the carriage body 10 and the horizontal direction is less than 60 degrees, and the value on the Y axis of the level 11 is also less than 60 degrees. The controller 12 in Fig. 1 controls the velocities of the wheels 14L and 14R provided on both the left and right sides, in the traveling direction, of the carriage body 10 to be equal to one another when the value on the Y axis of the level 11 is less than 60 degrees. Thus, the carriage body 10 can travel stably while maintaining the ability to move rectilinearly. In this way, the moving device 1 can travel stably on the surface of the member while maintaining the rectilinear moving direction at any position on the surface of the pipe 8 extending in the horizontal direction and in the vertical direction.

A member inspection method of the present embodiment is actually practiced as follows: the above-described moving device 1 is moved along the surface of the pipe 8; and the inspection device 18 inspects various parts of the surface of the pipe 8. At this time, the moving device 1 is moved along the surface of the pipe 8 while the velocity of each of the wheels 14L and 14R provided on both the left and right sides, in the traveling direction, of the carriage body 10 is controlled individually based on the angle of the carriage body 10 detected by the level 11.

In addition, a member manufacturing method of the present embodiment is actually practiced by including a step of inspecting various parts of the surface of the pipe 8 by using the above-described member inspection method.

As described above, the use of the above-described moving device 1 for the inspection of the surface of the pipe 8 can increase the accuracy in the inspection of the surface of the pipe 8 because the moving device 1 can travel stably along the surface of the pipe 8 while maintaining the ability to move rectilinearly. Moreover, the above-described moving device 1 is used for inspecting the surface of the pipe 8 when the pipe 8 is manufactured, and the product accuracy of the pipe 8 can thereby be increased.

Although the embodiments of the present invention have so far been described, the moving device, and the member inspection method and the member manufacturing method using the moving device, of the present invention, are not limited to the above-described embodiments. For example, in the above-described embodiments, the level 11 constituted by a bubble tube detects the angle between the traveling direction of the carriage body 10 and the horizontal direction and the angle between the width direction of the carriage body 10 and the horizontal direction. However, any detector capable of determining at least the angle between the width direction of the carriage body 10 and the horizontal direction will suffice, and a detector other than the level 11, such as an acceleration sensor, may be used to detect the above-described angle.

Although, in the description of the above-described embodiments, the pipe 8 is taken as an example of a member on which the moving device 1 moves while attracted to be held on the member, the member may be, for example, a structural member other than the pipe 8, such as a wall or a pillar.

Although, in the above-described embodiments, the example where the inspection device 18 mounted on the carriage body 10 moves along the surface of the pipe 8 to inspect various parts of the surface of the pipe 8 is described, the moving device 1 is not necessarily provided with the inspection device 18 when provided for different uses. Examples of the different uses may include various operations on a member, such as welding, gas cutting, grinding, and surface preparation, and, in such cases, the moving device 1 may be equipped with, for example, a torch or a polishing tool instead of the inspection device 18.

In addition, in the above-described embodiments, there is described the example where the velocity of the wheels on the lower side in the gravity direction is controlled to be higher than the velocity of the wheels on the higher side in the gravity direction when the angle between the width direction of the carriage body 10 and the horizontal direction is more than or equal to 60 degrees. However, the control method of the velocities of the wheels 14L and 14R is not limited to the above-described embodiments. For example, the velocity of each of the wheels 14L and 14R can be controlled individually so that the rectilinear moving direction of the moving device 1 is maintained, in consideration of various conditions such as the orientation and the angle of the moving device 1 and the inclination and the shape of a member on which the moving device 1 travels. Moreover, the angle (predetermined value) of the carriage body 10 when the velocities of the wheels 14L and 14R are to be controlled is not limited to 60 degrees. The velocity of the wheels on the lower side in the gravity direction may also be controlled to be higher than the velocity of the wheels on the higher side in the gravity direction when the angle is, for example, more than or equal to 45 degrees. Example

There were conducted traveling tests in which the moving device 1 of the present invention is moved, in the horizontal direction or in the up-down direction, on parts of the member whose surfaces form various angles with the horizontal direction. In the wheels 14L and 14R provided on both the left and right sides, in the traveling direction, of the carriage body 10, the velocity of the wheels on the lower side in the gravity direction was changed variously relative to the velocity of the wheels on the higher side in the gravity direction. Through the tests, the advantageous effects of the present invention were verified, and the results from the tests will be described.

The present traveling tests employ the moving device 1 in Fig. 2(a) or a similar device. The total weight of the moving device 1 is 20000 g. The distance between the wheel 14L and the corresponding wheel 14R provided on both the left and right sides, in the traveling direction, of the carriage body 10 is 300 mm, the distance between the wheel 14L at the front and the wheel 14L at the rear, which are provided on the left side, in the traveling direction, of the carriage body 10, is 300 mm, and the distance between the wheel 14R at the front and the wheel 14R at the rear, which are provided on the right side, in the traveling direction, of the carriage body 10, is 300 mm. The attraction force acting between the magnet 17 and the pipe 8 is 700 N. The outside diameter of the pipe 8 is 1200 mm.

First, as Fig. 3(a) illustrates, there were conducted traveling tests in the case where the moving direction of the moving device 1 is likely to turn under the influence exerted in the gravity direction. Specifically, the moving device 1 was moved on the surface of the pipe 8 extending in the horizontal direction, in a region, in the circumferential direction, between the position 81 of 2 o'clock and the position 82 of 4 o'clock or between the position 83 of 8 o'clock and the position 84 of 10 o'clock. While attracted to be held on the pipe 8, the moving device 1 was horizontally moved in the length direction of the pipe 8 at a velocity of 30 mm/s.

In the wheels 14L and 14R provided on both the left and right sides, in the traveling direction, of the carriage body 10, the ratio of the number of rotations (velocity) of the wheels on the lower side in the gravity direction to the number of rotations (velocity) of the wheels 14 on the higher side in the gravity direction was changed. Specifically, the ratio of the number of rotations (velocity) of the wheels on the lower side in the gravity direction was changed to six different ratios (tests No. 1 to 6): 100%, 101%, 102%, 103%, 105%, and 110%, and the downward-moving quantity of the moving device 1 when the moving device 1 traveled 1 m in the horizontal direction in each of the cases was measured. The results in the cases are shown in Table 1.

**[Table 1]**

| Test No. | Lower-Wheel Velocity / Lower-Wheel Rotation Number (%) | Downward-Moving Quantity During Horizontal Movement (cm/m) |
|---|---|---|
| 1 | 100 | 5.0 |
| 2 | 101 | 4.5 |
| 3 | 102 | 4.0 |
| 4 | 103 | 2.0 |
| 5 | 105 | 1.0 |
| 6 | 110 | 1.0 |

As Table 1 shows, in the wheels 14L and 14R provided on both the sides of the carriage body 10, when the velocity of the wheels on the lower side in the gravity direction was controlled to be higher than the velocity of the wheels on the higher side in the gravity direction, the downward-moving quantity of the moving device 1 was reduced compared with the case in which the velocities of the wheels on the higher side and the lower side in the gravity direction are the same. That is, in the moving device 1, the ability to maintain the rectilinear moving direction was improved. In particular, when the velocity of the wheels on the lower side in the gravity direction was controlled to be 5% or more higher than the velocity of the wheels on the higher side in the gravity direction, the downward-moving quantity of the moving device 1 when the moving device 1 traveled 1 m in the horizontal direction was reduced down to less than or equal to 1 cm. It was confirmed that the rectilinear moving direction of the moving device 1 was maintained, and the moving device 1 traveled stably on the surface of the member.

Next, there were conducted traveling tests in the case where the moving direction of the moving device 1 hardly turns due to the influence exerted in the gravity direction. Specifically, the moving device 1 was moved on the surface of the pipe 8 extending in the horizontal direction, in a region, in the circumferential direction, between the position 84 of 10 o'clock and the position 81 of 2 o'clock or between the position 82 of 4 o'clock and the position 83 of 8 o'clock. While attracted to be held on the pipe 8, the moving device 1 was horizontally moved in the length direction of the pipe 8 at a velocity of 30 mm/s. In this case, it was confirmed that the rectilinear moving direction of the moving device 1 was maintained, and the moving device 1 traveled stably on the surface of the member, by the numbers of rotations (velocities) of the wheels 14L and 14R that are provided on both the left and right sides, in the traveling direction, of the carriage body 10 being equal to one another.

Moreover, as Fig. 4(a) illustrates, while attracted to be held on the surface of the pipe 8 extending in the horizontal direction, the moving device 1 was moved in the up-down direction at a velocity of 30 mm/s so as to turn around the pipe 8. In addition, as Fig. 4(b) illustrates, while attracted to be held on the surface of the pipe 8 extending in the vertical direction, the moving device 1 was moved in the up-down direction at a velocity of 30 mm/s so as to be moved in the length direction of the pipe 8. In these cases, it was also confirmed that the rectilinear moving direction of the moving device 1 was maintained, and the moving device 1 traveled stably on the surface of the member, by the numbers of rotations (velocities) of the wheels 14L and 14R that are provided on both the left and right sides, in the traveling direction, of the carriage body 10 being equal to one another.

### Reference Signs List

1 to 4 moving device
8 pipe (member)
10 carriage body
11 level (detector)
11a bubble
12 controller
14L, 14R wheel (moving mechanism)
14aL, 14aR magnetic wheel (moving mechanism, attracting mechanism)
15L, 15R crawler track (moving mechanism)
15aL, 15aR magnetic crawler track (moving mechanism, attracting mechanism)
16L, 16R motor (moving mechanism)
17 magnet (attracting mechanism)
18 inspection device

## Claims

1. A moving device comprising:
a carriage body;
moving mechanisms provided on both left and right sides, in a traveling direction, of the carriage body and configured to move the carriage body along a surface of a member;
an attracting mechanism by which the carriage body is attracted to be held on the surface of the member;
a detector configured to detect an angle between a width direction, of the carriage body, orthogonal to the traveling direction and a horizontal direction; and
a controller configured to control individually velocities of the moving mechanisms provided on both the left and right sides in the traveling direction, based on the angle detected by the detector.

2. The moving device according to Claim 1, wherein the moving mechanisms are wheels or crawler tracks.

3. The moving device according to Claim 1 or Claim 2, wherein the member is a soft magnetic material, and the attracting mechanism is a magnet.

4. The moving device according to Claim 3, wherein the magnet is incorporated into each of the moving mechanisms.

5. The moving device according to any one of Claims 1 to 4, wherein the detector is a level.

6. The moving device according to any one of Claims 1 to 5, wherein the controller is configured to control, when the carriage body is moved along the surface of the member with the angle detected by the detector being more than or equal to a predetermined value, the velocities of the moving mechanisms provided on both the left and right sides in the traveling direction so that a velocity of a lower side one of the moving mechanisms in a gravity direction is higher than a velocity of a higher side one of the moving mechanisms in the gravity direction.

7. The moving device according to Claim 6, wherein the controller is configured to control, when the carriage body is moved along the surface of the member with the angle detected by the detector being more than or equal to the predetermined value, the velocities of the moving mechanisms provided on both the left and right sides in the traveling direction so that the velocity of the lower side one of the moving mechanisms in the gravity direction is 5% or more higher than the velocity of the higher side one of the moving mechanisms in the gravity direction.

8. The moving device according to any one of Claims 1 to 7, wherein the controller is configured to control, when the carriage body is moved along the surface of the member with the angle detected by the detector being less than a predetermined value, the velocities of the moving mechanisms provided on both the left and right sides in the traveling direction to be equal to each other.

9. The moving device according to any one of Claims 6 to 8, wherein the predetermined value is 60 degrees.

10. The moving device according to any one of Claims 1 to 9, further comprising an inspection device mounted on or in the carriage body and configured to inspect the surface of the member.

11. A member inspection method comprising, inspecting, by using the moving device according to Claim 10, each part of the surface of the member by moving the moving device along the surface of the member while controlling individually the velocities of the moving mechanisms based on the angle detected by the detector.

12. A member manufacturing method comprising a step of inspecting each part of a surface of a member in accordance with the member inspection method according to Claim 11.
